# EUROPÄISCHE PATENTSCHRIFT

(11) **EP 2 535 145 B1**
(45) Veröffentlichungstag und Bekanntmachung des Hinweises auf die Patenterteilung: **18.05.2022**
(21) Anmeldenummer: 12001088.9
(22) Anmeldetag: 17.02.2012
(51) Int. Cl.: B24D 18/00, B24D 5/14, B24D 7/14, B24D 11/04

(54) **Verfahren zur Herstellung eines Grundkörpers mit Hartstoffpartikeln**
Method for manufacture of a carrier with hard particles
Procédé de fabrication d'un corps de base doté de particules de matière solide

(30) Priorität: 22.03.2011 CH 4922011
(43) Veröffentlichungstag der Anmeldung: 19.12.2012
(73) Patentinhaber: Reishauer AG, 8304 Wallisellen (CH)
(72) Erfinder: Wunder, Sherline, 8304 Wallisellen (CH); Rudolf, Christoph, 8052 Zürich (CH); Zigerlig, Benno, 5417 Untersiggenthal (CH); Kuster, Friedrich, 8732 Neuhaus / SG (CH)
(74) Vertreter: Luchs, Willi

(56) Entgegenhaltungen:
- EP-A1- 1 208 945
- JP-A- S62 152 676
- SU-A2- 1 110 618
- US-A- 1 881 590

## Beschreibung

Die Erfindung betrifft ein Verfahren zur Herstellung eines Grundkörpers mit Hartstoffpartikeln, vorzugsweise Superabrasives, nach dem Oberbegriff des Anspruchs 1.

Bei einem gattungsmässigen Verfahren nach der Druckschrift EP-A-1 208 945 zum Herstellen von abrasiven Werkzeugen wird auf einen Träger vorerst ein Klebstoff in Form von Tröpfchen aufgetragen. Danach werden Hartstoffpartikel auf den mit Klebstofftröpfchen versehenen Träger aufgestreut und es sollen dabei nur die Hartstoffpartikel am Träger haften bleiben, die in Kontakt mit einem Klebstofftröpfchen kommen.

Die Aufgabe der vorliegenden Erfindung besteht darin, ein Verfahren zur Belegung von Grundkörpern nach der eingangs erwähnten Gattung zu schaffen, welches ein schnelles Belegen eines Grundkörpers mit vereinzelten Hartstoffpartikeln ermöglicht und eine sichere Haftung derselben am Grundkörper gewährleistet, bis diese mit einem nachfolgenden Prozess durch Löten verankert werden.

Erfindungsgemäss ist diese Aufgabe durch ein Verfahren nach den Merkmalen des Anspruchs 1 gelöst.

Das Verfahren nach der Erfindung sieht vor, dass als erstes ein Kleberfilm gleichmässig auf die gesamte oder einen Teil der Arbeitsfläche des herzustellenden Werkzeugs aufgetragen wird.

Für die Belegung der Kleberfläche mit vereinzelten Hartstoffpartikeln sieht das Verfahren nach der Erfindung vor, dass die Hartstoffpartikel als erstes gleichmässig auf einer Auflagefläche verteilt werden, oberhalb respektive unterhalb dieser das Werkzeug platziert wird und diese in einem vorgegebenen Abstand zueinander positioniert werden. In der Folge werden diese Hartstoffpartikel von der Auflagefläche bis an die mit dem Klebstoff-Film beaufschlagte Bearbeitungsfläche des Werkzeuges bewegt, so dass diese an der Bearbeitungsfläche haften bleiben.

Durch Zonenbildung von Teilflächen sind auch unterschiedliche Belegungsdichten oder zonenabhängige Hartstoffpartikeltypen und/oder Grössen vorgesehen, was z.B. durch Wiederholung des zuvor beschriebenen Verfahrens erreicht werden kann.

Dieses erfindungsgemässe Verfahren ermöglicht eine schnelle Beschichtung der Arbeitsfläche des Werkzeuges in einer pro Flächeneinheit bestimmbaren gleichmässigen Anzahl von vereinzelten Hartstoffpartikeln.

Ausführungsbeispiele sowie weitere vorteilhafte Einzelheiten dieses Verfahrens bzw. dieser Einrichtung sind in den abhängigen Ansprüchen definiert.

Ausführungsbeispiele sowie weitere Vorteile der Erfindung sind nachfolgend anhand einer Zeichnung näher erläutert. Es zeigt:
- Fig. 1: eine Einrichtung zum Belegen eines Grundkörpers mit vereinzelten Hartstoffpartikeln zur Durchführung des erfindungsgemässen Verfahrens;
- Fig. 2: ein Werkzeug in perspektivischer Ansicht, welches auf seiner Arbeitsfläche mit Hartstoffpartikeln belegt ist;
- Fig. 3: einen Teilschnitt durch den Behälter und das Werkzeug mit Ansicht von mehreren Hartstoffpartikeln, welche nach dem erfindungsgemässen Verfahren aufgetragen worden sind;
- Fig. 4: eine Variante einer Einrichtung in schematischer perspektivischer Darstellung; und
- Fig. 5: eine weitere Variante einer Einrichtung in schematischer perspektivischer Darstellung.

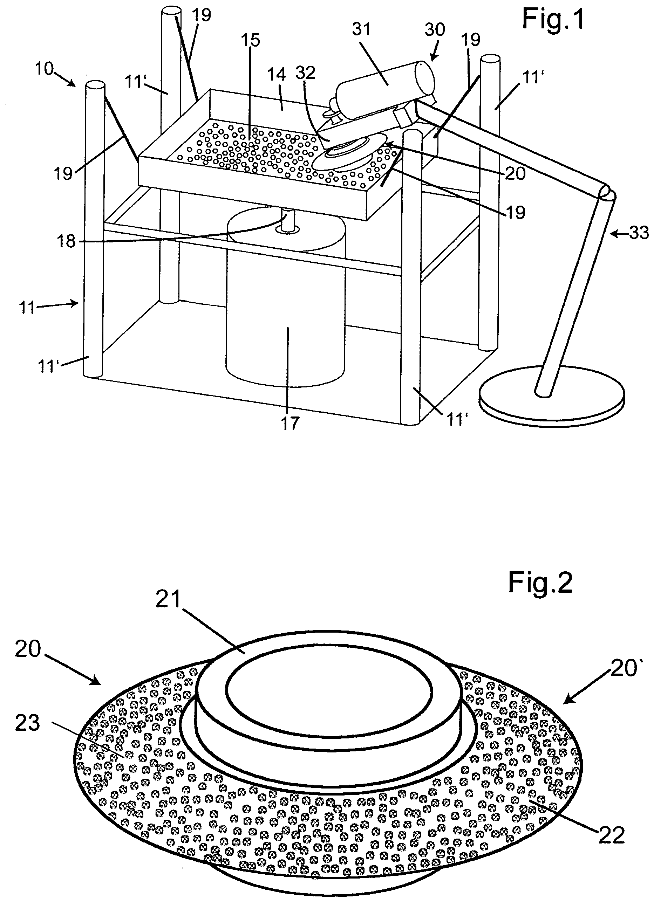

Mit dem Verfahren werden Werkzeuge 20 beliebiger Oberflächengeometrie, wie zum Beispiel Schleif-, Hohn- und Abrichtwerkzeuge aller Art, wie zum Beispiel z.B. in Fig. 2 dargestellt, auf ihren Arbeitsflächen 20' mit abrasiven Hartstoffpartikeln belegt. Bei diesen Hartstoffpartikeln 22 können unterschiedliche Materialien, wie Superabrasives oder andere hochabrasive Werkstoffe verwendet werden.

Bei dem Verfahren wird vorerst in an sich bekannter Weise ein Klebstoff mit einer definierten Filmdicke im Wesentlichen auf die gesamte Arbeitsfläche des Grundkörpers aufgebracht.

Erfindungsgemäss werden vorerst die Hartstoffpartikel 22 gleichmässig auf einer Auflagefläche 15 verteilt. Oberhalb dieser Auflagefläche 15 wird dann der Grundkörper des herzustellenden Werkzeugs 20, der auf den zu belegenden Zonen oder auf der gesamten Arbeitsfläche einen Kleberfilm aufweist, so plaziert, dass der Grundkörper in einem vorgegebenen Abstand zur Auflagefläche 15 positioniert ist. Anschliessend werden die Hartstoffpartikel 22 von der Auflagefläche 15 bis an die mit dem Klebstoff-Film beaufschlagten Bearbeitungsfläche 20' des Grundkörpers 20 hochbewegt, so dass diese am Kleberfilm auf der Arbeitsfläche 20' haften bleiben.

Gemäss Fig. 1 umfasst die erfindungsgemässe Einrichtung 10 für die Durchführung des Verfahrens einen an einem Gestell 11 mit mehreren Ständern 11' gehaltenen Behälter 14, ein mit diesem verbundener Antrieb 17 für die Erzeugung der annähernd senkrecht zur Fläche erfolgenden Auf- und Abwärtsbewegung des Behälters, sowie eine das zu erstellende Werkzeug 20 haltende und bewegende Verstellvorrichtung 30.

Dieser ebenflächige wannenförmige Behälter 14 ist mit einer horizontalen Ausrichtung seiner Auflagefläche 15 angeordnet und höhenverstellbar an einer flexible Längselemente 19 aufweisenden Halterung positioniert. Durch diese Aufhängung kann der Behälter 14 auf- und abwärts bewegt werden, wobei zu diesem Zwecke ein auf der Unterseite des Behälters 14 angreifender Stössel 18 des Antriebes 17 vorgesehen ist, welcher annähernd senkrecht zum Behälter angeordnet ist und mit seinem vorderen Ende mit dem Behälter in Kontakt stehend durch den Antrieb 17 eine Auf- und Abwärtsbewegung ausführt.

Mit dieser erzeugten Rüttelbewegung auf den Behälter 14 und damit auf diese lose in diesem liegenden Hartstoffpartikel 22 werden letztere von der Auflagefläche 15 des Behälters 14 abgehoben und nach oben bis an die Arbeitsfläche 20' des Werkzeuges 20 bewegt und bleiben daran haften. Die Hartstoffpartikel 22 sind hierbei einlagig in dem Behälter 14 verteilt angeordnet und werden wenn nötig während dem Belegen wieder nachgefüllt. Der die Auflagefläche bildende plattenförmige Behälter 14 kann durch auflageflächenparallele Bewegungen benützt werden, um die Verteilung der lose auf der Auflagefläche 15 liegenden Hartstoffpartikel 22 zu beeinflussen.

Bei einem weiteren erfinderischen Schritt wird das Werkzeug 20 oberhalb der Auflagefläche 15 kontinuierlich oder schrittweise so bewegt, dass sich der mit den Hartstoffpartikeln 22 zu versehende Teil der Arbeitsfläche 20'stets in gleichem Abstand zur Auflagefläche befindet. Eine solche Verstellung ist dann erforderlich, wenn diese Arbeitsfläche 20' nicht als ebene Fläche, sondern wie zum Beispiel in Fig. 2 dargestellt ist, kegelstumpfförmig ausgebildet ist.

Zu diesem Zwecke ist im Rahmen der Erfindung diese den Grundkörper 20 haltende und bewegende Verstellvorrichtung 30 vorgesehen, die aus einem Ständer 33, einem an diesem befestigten Spannfutter 32 für die Aufnahme des Werkzeuges und einem Motor 31 zusammengesetzt ist, wobei der Motor 31 derart mit dem herzustellenden Werkzeug koppelbar ist, dass dieses eine Drehung um seine Drehachse ausführt. Alternativ könnte die Verstellvorrichtung ein Roboter bzw. Manipulator sein, mittels welchem die Positionierung des Grundkörpers automatisch erfolgen würde.

Bei einer Belegung der in Fig. 2 gezeigten Arbeitsfläche 20' dieses kegelförmigen, als Schleif-, Hohn- oder Abrichtscheibe vorgesehenen Werkzeuges 20 mit einem zylindrischen Schaft 21 ist der Behälter 14 derart ausgebildet, dass der kurze Abstand von bspw. ca. einem Zentimeter zwischen der Auflagefläche 15 und dieser Arbeitsfläche 20' gegeben ist.

Für die gesamte Steuerung der Einrichtung 10 für diesen Belegungsvorgang ist vorteilhaft eine nicht veranschaulichte elektrische Steuerung vorgesehen, mittels welcher diese kontinuierliche oder schrittweise Bewegung des Werkzeuges 20 sowie der Antrieb für die Auf- und AbBewegung des Behälters über einen Computer oder dergleichen steuerbar ist. Damit kann die vorgegebene Dichte pro Flächeneinheit der Hartstoffpartikel auf der Arbeitsfläche des Werkzeuges über diese Steuerung leichter kontrolliert werden, indem zum Beispiel die Frequenz, Amplitude, Zeit der Schwingerregung der Auflagefläche, respektive der Drehgeschwindigkeit des Grundkörper gesteuert werden.

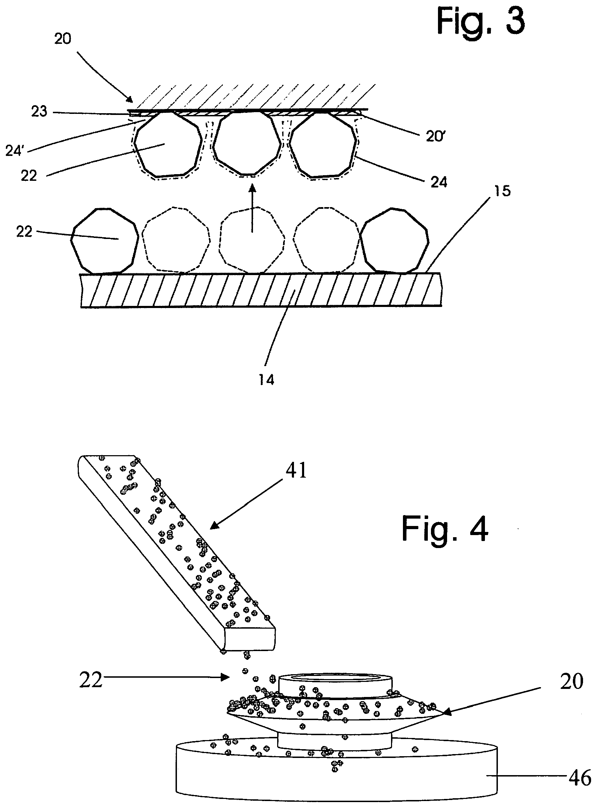

In Fig. 3 ist noch ein vergrösserter Schnitt des teilweise ersichtlichen Behälters 14 bzw. Werkzeuges 20 mit Ansicht von Hartstoffpartikeln 22 gezeigt.

Anschliessend an die Belegung der Arbeitsfläche 20' erfolgt eine Aushärtung des Klebers gefolgt von z.B. der kontrollierten Aufbringung einer Lotschicht 24 auf der gesamten belegten Arbeitsfläche. Zusätzlich zu Lotschicht kann noch eine Lotmatrixverstärkung, bestehend aus wesentlich kleineren Hartstoffpartikeln und Binder, auf die mit Hartstoffpartikeln belegte Arbeitsfläche des Werkzeuges aufgebracht werden und mittels anschliessender Lötung zur definitiven stoffschlüssigen Verankerung der Hartstoffpartikel 22 über das Lot 24, möglicherweise mit zusätzlicher Lotmatrixverstärkung, mit dem Grundkörper fest verankert werden.

Gemäss Fig. 4 umfasst eine Variante einer erfindungsgemässen Einrichtung 40 eine bandförmige Fördervorrichtung 41, die kontinuierlich und gleichmässig mit Hartstoffpartikel 22 liefert. Die bandförmige Fördervorrichtung 41, die sich mit einer kontinuierlichen Geschwindigkeit bewegt, wird eingangsseitig mit Hartstoffpartikeln 22 beschickt, welche dann über eine bestimmte Länge geführt und dabei vereinzelt werden und auf diese rotierende mit Klebstoff-Film beaufschlagte Bearbeitungsfläche des Grundkörpers 20 fallen und haften bleiben.

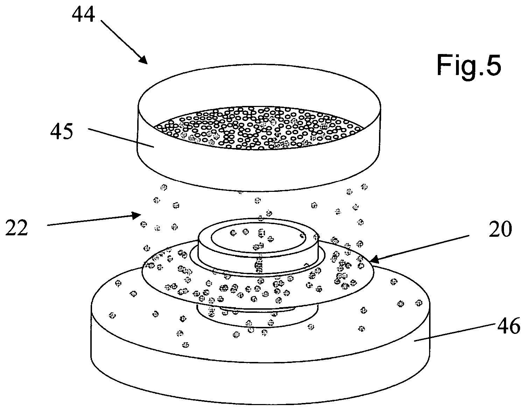

Gemäss Fig. 5 umfasst eine erfindungsgemässe Einrichtung 44 eine Streuvorrichtung 45, beispielsweise ein Sieb, welches vorteilhaft maschinell hin- und herbewegt wird und die Hartstoffpartikel 22 gleichmässig durch die Sieblöcher auf den mit einem Klebstoff-Film versehenen rotierenden Grundkörper 20 fallen und darauf haften bleiben.

Im Rahmen der Erfindung können die Auflagefläche 15, das Förderband 41 bzw. die Streuvorrichtung 45 beliebig in der Lage und Orientierung gegenüber der zu belegenden Arbeitsfläche 20' eines herzustellenden Werkzeuges 20 oder ähnlichem eingestellt werden. Damit kann eine gezielte Belegung von Hartstoffpartikeln auf der Arbeitsfläche ermöglicht werden.

Die zu belegenden Arbeitsfläche 20' des herzustellenden Werkzeuges 20 kann beliebig kontinuierlich oder schrittweise gegenüber der Auflagefläche 15 respektive des Förderbands 41 oder der Streuvorrichtung 45 in der Lage bewegt werden.

Als Klebstoff könnte auch ein Haftmittel verstanden werden, welches zum Beispiel aus einer teigigen bis flüssigen Metallschicht bestehen könnte, bei welcher dann die Körner entsprechend eingebettet werden.

## Patentansprüche

1. Verfahren zur Herstellung eines Grundkörpers mit Hartstoffpartikeln, vorzugsweise Superabrasives, bei dem vorerst ein Klebstoff (23) mit einer definierten Filmdicke auf die gesamte oder Teile der Arbeitsfläche (20') des herzustellenden Werkzeuges aufgebracht wird, und dass anschliessend die Hartstoffpartikel (22) auf die mit dem Klebstoff (23) versehenen Bereiche der Arbeitsfläche für eine bleibende Haftung aufgebracht werden, wobei die Hartstoffpartikel (22) durch eine geeignete Einrichtung gleichmässig aufgetragen und nachher auf die mit dem Klebstoff (23) versehene Arbeitsfläche (20') des herzustellenden Werkzeuges (20) übertragen werden, an der sie haften bleiben, bevor der Klebstoff (23) ausgehärtet ist, **dadurch gekennzeichnet, dass**
ein eine Auflagefläche bildender plattenförmiger Behälter (14) durch eine annähernd senkrecht zur Auflagefläche (15) erzeugte Rüttelbewegung über einen kurzen Hub nach oben bewegt und somit die lose auf der Auflagefläche (15) liegenden Hartstoffpartikel (22) abheben und nach oben bis an die Arbeitsfläche (20') des herzustellenden Werkzeuges (20) bewegt werden und daran haften bleiben.

2. Verfahren nach Anspruch 1, **dadurch gekennzeichnet, dass** der die Auflagefläche bildende plattenförmige Behälter (14) durch auflageflächenparallele Bewegungen benützt werden kann, um die Verteilung der lose auf der Auflagefläche (15) liegenden Hartstoffpartikel (22) zu beeinflussen.

3. Verfahren nach Anspruch 1 oder 2, **dadurch gekennzeichnet, dass** eine elektrische Steuerung der kontinuierlichen oder schrittweisen Bewegung des herzustellenden Werkzeuges (20) sowie der Bewegungsvorrichtung für die Hartstoffpartikel (22) erfolgt, mittels welcher über die Bewegungen und die Zeit die Dichte pro Flächeneinheit der Hartstoffpartikel (22) auf der Arbeitsfläche (20') des Werkzeuges (20) eingestellt werden kann.

4. Verfahren nach einem der vorangehenden Ansprüche 1 bis 3, **dadurch gekennzeichnet, dass** auf der Arbeitsfläche (20') des Werkzeugs Zonen gebildet werden können, die sequenziell belegt werden, so dass Dichte, Grösse oder andere Eigenschaften der Hartstoffpartikel gezielt auf bestimmte Zonen aufgebracht werden können.

5. Verfahren nach einem der vorangehenden Ansprüche 1 bis 4, **dadurch gekennzeichnet, dass** die Hartstoffpartikel (22) durch einen Verankerungsprozess mit dem Grundkörper (20) verbunden werden.

6. Verfahren nach Anspruch 5, **dadurch gekennzeichnet, dass** die Hartstoffpartikel (22) durch einen abgestimmten Lötprozess definitiv stoffschlüssig auf dem Grundkörper (20) verankert werden.

7. Verfahren nach Anspruch 6, **dadurch gekennzeichnet, dass** sich der geeignete Lötprozess aus dem abgestimmten Auftragsverfahren des Lotes und abschliessendem Löten in einem Ofen unter Schutzgas oder Vakuum zusammensetzt.

8. Verfahren nach Anspruch 6, **dadurch gekennzeichnet, dass** zusätzlich zum Lot noch eine Lotmatrixverstärkung, bestehend aus wesentlich kleineren Hartstoffpartikeln und Binder, auf die mit Hartstoffpartikeln belegte Arbeitsfläche des Werkzeuges aufgebracht werden kann.

9. Verfahren nach einem der vorangehenden Ansprüche 1 bis 8, **dadurch gekennzeichnet, dass** die zu belegende Arbeitsfläche (20') des herzustellenden Werkzeuges (20) beliebig kontinuierlich oder schrittweise gegenüber der Auflagefläche (15) in der Lage bewegt werden kann.

## Claims

1. A method for producing a base body with hard material particles, preferably superabrasives, in which first of all an adhesive (23) is applied with a defined film thickness to the entire or parts of the working surface (20') of the tool to be produced, and that the hard material particles (22 are then applied to the regions of the working surface provided with the adhesive (23) for lasting adhesion, whereby the hard material particles (22) are applied by an appropriate apparatus and are then transferred to the working surface (20') of the tool (20) to be produced provided with the adhesive (23) on which they remain adhered before the adhesive (23) has hardened, **characterised in that**
a plate-shaped container (14) forming a contact surface moves upwards over a short stroke by means of a shaking motion produced approximately perpendicular to the contact surface (15), and so the hard material particles (22) lying loosely on the contact surface (15) lift and are moved upwards to the working surface (20') of the tool (20) to be produced and remain adhered to the latter.

2. The method according to Claim 1, **characterised in that** the plate-shaped container (14) forming the contact surface (14) can be used by means of movements parallel to the contact surface in order to affect the distribution of the hard material particles (22) lying loosely on the contact surface (15).

3. The method according to Claim 1 or 2, **characterised in that** an electrical control of the continuous or step by step movement of the tool (20) to be produced and of the movement apparatus for the hard material particles (22) takes place, by means of which, by means of the movements and the time, the density per unit of area of the hard material particles (22) over the working surface (20') of the tool (20) can be set.

4. The method according to any of the preceding Claims 1 to 3, **characterised in that** there can be formed over the working surface (20') of the tool zones which are coated sequentially so that the density, size or other properties of the hard material particles can be applied specifically to certain zones.

5. The method according to any of the preceding Claims 1 to 4, **characterised in that** the hard material particles (22) are connected to the base body (20) by an anchoring process.

6. The method according to Claim 5, **characterised in that** the hard material particles (22) are definitively anchored, firmly bonded, on the base body (20) by an adapted soldering process.

7. The method according to Claim 6, **characterised in that** the appropriate soldering process is made up of the adapted method for applying the solder and final soldering in a furnace in inert gas or a vacuum.

8. The method according to Claim 6, **characterised in that** in addition to the solder, solder matrix reinforcement, consisting of substantially smaller hard material particles and binders, can be applied to the working surface coated with hard material particles of the tool.

9. The method according to any of the preceding Claims 1 to 8, **characterised in that** the position of the working surface (20') to be coated of the tool (20) to be produced can be moved, as one wishes, continuously or step by step in relation to the contact surface (15).

## Revendications

1. Procédé de fabrication d'un corps de base ayant des particules de matière dure, de préférence superabrasif, dans lequel on dépose d'abord une colle (23) en une épaisseur de pellicule définie sur tout ou partie de la surface (20') de travail de l'outil de fabrication, et en ce qu'ensuite on dépose les particules (22) de matière dure sur les parties, pourvues de la colle (23), de la surface de travail pour une adhérence persistante, dans lequel on dépose uniformément les particules (22) de matière dure par un dispositif approprié et on les transporte ensuite à la surface (20') de travail, pourvue de la colle (23), de l'outil (20) de fabrication, à laquelle elles restent adhérentes, avant que la colle (23) ne soit durcie, **caractérisé en ce que**
on déplace vers le haut sur une course courte un récipient (14) en forme de plaque formant une surface de support, par un mouvement de vibration produit à peu près perpendiculairement à la surface (15) de support et on soulève ainsi les particules (22) de matière dure, se trouvant de manière lâche sur la surface (15) de support, et on les déplace vers le haut jusqu'à la surface (20') de travail de l'outil (20) de fabrication et elles y restent adhérentes.

2. Procédé suivant la revendication 1, **caractérisé en ce que** le récipient (14) en forme de plaque formant la surface de support peut être utilisé par des mouvements parallèles à la surface de support, pur influencer la répartition des particules (22) de matière dure se trouvant sur la surface (15) de support.

3. Procédé suivant la revendication 1 ou 2, **caractérisé en ce qu'**une commande électrique du mouvement continu ou pas à pas de l'outil (20) de fabrication, ainsi que du dispositif de mise en mouvement des particules (22) de matière dure, au moyen de laquelle on peut régler, par les mouvements et le temps, la masse volumique par unité de surface des particules (22) de matière dure sur la surface (20') de travail de l'outil (20).

4. Procédé suivant l'une des revendications 1 à 3 précédentes, **caractérisé en ce que**, sur la surface (20') de travail de l'outil, peuvent être formées des zones, qui sont occupées séquentiellement, de manière à ce que la masse volumique, la dimension ou d'autres propriétés des particules de matière dure puissent être obtenues de manière ciblée sur des zones déterminées.

5. Procédé suivant l'une des revendications 1 à 4 précédentes, **caractérisé en ce qu'**on lie les particules (22) de matière dure au corps (20) de base par un processus d'ancrage.

6. Procédé suivant la revendication 5, **caractérisé en ce que** l'on ancre les particules (22) de matière, de manière définitive à coopération de matière au corps (20) de base dure par un processus de brasage adapté.

7. Procédé suivant la revendication 6, **caractérisé en ce que** le processus de brasage approprié se compose du procédé de dépôt adapté de la brasure et du brasage final dans un four sous gaz protecteur ou sous vide.

8. Procédé suivant la revendication 6, **caractérisé en ce que**, en plus de la brasure, on peut déposer un renfort de matrice de brasure, constitué de particules de matière dure sensiblement plus petites et de liant, sur la surface de travail, occupée par des particules de matière dure, de l'outil.

9. Procédé suivant l'une des revendications 1 à 8 précédentes, **caractérisé en ce que** l'on peut déplacer en position à volonté en continu ou pas à pas, par rapport à la surface (15) de support, la surface (20') de travail à occuper de l'outil (20) de fabrication.
